# EUROPÄISCHE PATENTSCHRIFT

(11) **EP 3 649 770 B1**
(45) Veröffentlichungstag und Bekanntmachung des Hinweises auf die Patenterteilung: **12.03.2025**
(21) Anmeldenummer: 18759542.6
(22) Anmeldetag: 03.07.2018
(51) Int. Cl.: H04M 1/04, H04M 1/02, H04B 1/3877, B60R 11/02, G06F 1/16

(54) **HALTERUNGSANORDNUNG FÜR MOBILE ENDGERÄTE**
HOLDER ASSEMBLY FOR MOBILE TERMINAL EQUIPMENT
ENSEMBLE DE FIXATION POUR DES TERMINAUX MOBILES

(30) Priorität: 04.07.2017 DE 202017003503 U
(43) Veröffentlichungstag der Anmeldung: 13.05.2020
(73) Patentinhaber: Isiris Solutions GmbH, 22547 Hamburg (DE)
(72) Erfinder: TROJAN, Michael, 20255 Hamburg (DE)
(74) Vertreter: Spahn, Tobias
(86) Internationale Anmeldenummer: PCT/DE2018/000201
(87) Internationale Veröffentlichungsnummer: WO 2019/007450

(56) Entgegenhaltungen:
- WO-A1-2014/034998
- DE-A1- 19 955 095
- DE-U1- 202014 101 923
- US-A1- 2004 132 343
- US-A1- 2007 002 533
- US-A1- 2011 164 173
- US-A1- 2017 062 999

## Beschreibung

### Technisches Gebiet

Die Erfindung betrifft eine Halterungsanordnung für mobile Endgeräte.

### Stand der Technik

Mobile Endgeräte sind tragbare elektronische Geräte mit mobiler Stromversorgung, wie etwa Mobiltelefone, Smartphones, Handhelds, PDAs, MDEs, Pocket Computer oder Tabletcomputer. Derartige Endgeräte sind zur mobilen Verwendung außerhalb eines ständigen stationären Stellorts oder -platzes geeignet und gedacht, wie etwa dem Telefonieren oder der Navigation beim Gehen oder Fahren oder dem Fotografieren oder der Datenerfassung oder -eingabe an einem belieben Einsatzort. Hierbei ist häufig eine freihändige Benutzung des mobilen Endgerätes erforderlich oder wünschenswert - etwa zur Navigation oder zum Telefonieren während des Fahrens mit einem Fahrzeug. Gleichzeitig erfordern solche Endgeräte beim mobilen Einsatz regelmäßig das Wiederaufladen ihrer mobilen Stromversorgung, in der Regel ist dies ein Akkumulator.

Im Stand der Technik generell bekannt sind Einrichtungen zur Halterung eines mobilen Endgeräts in einem Fahrzeug, wie beispielsweise Saugnapf-Halterungen zur Befestigung eines Smartphones an der Innenseite der Windschutzscheibe eines Automobils. In der Regel über eine Kabelverbindung zum Zigarettenanzünder oder einen proprietären Anschluss zur Bordelektrik oder -elektronik ist hierbei gleichzeitig die Stromversorgung des Smartphones entweder zum Betrieb oder - soweit erforderlich - zum gleichzeitigen Wiederaufladung des Akkumulators gewährleistet. Ferner bekannt sind im Stand der Technik generell Andockstationen (Dockingstation, Cradle) zur Halterung oder Lagerung des mobilen Endgerätes an einem regelmäßigen stationären Aufenthaltsort, welche in der Regel eine physische Aufnahme- oder Lagerungseinrichtung sowie eine Einrichtung zur Energieversorgung umfassen. Nachteilhaft ist bei derartigen Einrichtungen generell, dass sie nur für einen bestimmten Einsatzzweck gedacht und ausgestaltetet sind, nämlich entweder zur Installation in einem Kraftfahrzeug oder zur Nutzung an einem regelmäßigen stationären Aufenthaltsort, beispielsweise dem Schreibtisch. Ferner sind derartige Einrichtungen regelmäßig zur Nutzung mit einem bestimmten Gerätetyp ausgestaltet.

Geräte mit unterschiedlichen Abmessungen oder einer anderen Stromversorgungsschnittstelle können nicht mit derselben Saugnapf-Halterung oder Andockstation benutzt werden. Aus demselben Grund macht die Anschaffung eines neuen Gerätes gleichzeitig auch die Neuanschaffung einer passenden Saugnapf-Halterung und/oder Andockstation erforderlich. Bei der gewerblichen Nutzung oder dem industriellen Produktiveinsatz von unternehmenseigenen mobilen Endgeräten, beispielsweise zur mobilen Datenerfassung durch Mitarbeiter, die bestimmungsgemäß nach Arbeitsschluss in den Betriebsräumen verbleiben, ist die Anschaffung unterschiedlicher Halterungs- und Lagerungseinrichtungen mit Stromversorgung jeweils für den mobilen Einsatz in Fahrzeugen, als auch zur Lagerung in den Betriebsräumen erforderlich. Bei der Nutzung unterschiedlicher mobiler Endgeräte erfordert dies die Anschaffung und Bereitstellung entsprechender unterschiedlicher Halterungs- und Lagerungseinrichtungen. Bei einem Gerätewechsel müssen entsprechende neue Halterungs- und Lagerungseinrichtungen angeschafft werden.

Aus der DE 20 2014 010 006 U1 ist eine Schutzhülle und Basisstation für elektronische Handgeräte bekannt. Die Schutzhülle und die Basisstation ermöglichen die Halterung, Lagerung und Wiederaufladung lediglich an einem bestimmten stationären Stellort oder -platz für das Gerät. Ferner ist beides zur Verwendung mit einem bestimmten Gerätetyp abgestimmt, wobei jeder Gerätetyp eine Anpassung und Neuherstellung sämtlicher Komponenten erforderlich macht. Der parallele Einsatz unterschiedlicher Gerätetypen sowie ein Gerätewechsel in einem Unternehmen machen jeweils die Parallel- oder Neuanschaffung jeweils sämtlicher, entsprechend an die unterschiedlichen Gerätetypen angepasster Komponenten erforderlich.

Aus der 20 2016 003 776 U1 ist ein Bedienterminal bekannt, welches ein als verschließbares Gehäuse mit einem Innenraum zur Aufnahme eines Tablet-PCs ausgestaltetes Bedienteil und eine mit dem Bedienteil über eine lösbare mechanisch -körperliche Verbindung verbindbare Dockingstation umfasst. In einer Ausführung ist das Gehäuse über die Dockingstation mit einer Stromquelle verbindbar ausgebildet, indem sowohl die mechanisch-körperliche Verbindung, als auch der Innenraum des Gehäuses Kontaktmittel zur Herstellung einer Verbindung mit einer Stromquelle aufweisen. Aufgrund dieser technischen Gestaltung ermöglicht die von der 20 2016 003 776 U1 offenbarte Konstruktion die Verwendung der Dockingstation mit unterschiedlichen Tablet-PC-Modellen, indem jeweils lediglich das Gehäuse an die jeweilige Raumform des gewünschten Tablet-PCs angepasst werden muss. Das von der 20 2016 003 776 U1 offenbarte Bedienterminal ermöglicht jedoch lediglich die Halterung, Lagerung und Wiederaufladung von Tablet-PCs an einem bestimmten stationären Stellort oder -platz mit einer Dockingstation. Ferner ist zur Verwendung mit der Dockingstation für jeden Gerätetyp zwingend die Konfektionierung eines entsprechenden Gehäuses erforderlich.

Die WO 2014/034998 A1 offenbart eine Rückenschale für Smartphones, welche auf ihrer Innenseite und Außenseite elektrische Kontaktmittel zur elektrischen Kontaktierung eines in die Rückenschale eingelegten Smartphones mit einem externen Ladegerät aufweist.

Die US 2004/132343 A1 offenbart eine Halterung für mobile Endgeräte, in die eine Adapterschale einstellbar und herausnehmbar ist.

### OFFENBARUNG DER ERFINDUNG

Der Erfindung liegt die Aufgabe zugrunde, ein konstruktiv einfach herstellbares und modular konfektionierbares System zur Halterung, Lagerung und Wiederaufladung von unterschiedlichen mobilen Endgeräten sowohl bei deren mobilen Nutzung, als auch an einem stationären Stellort oder -platz zu schaffen. Insbesondere soll eine universell für unterschiedliche mobile Endgeräte nutzbare Schnittstelle sowohl für deren physische Halterung und Lagerung, als auch ihre elektrische Wiederaufladung geschaffen werden.

Die Aufgabe wird erfindungsgemäß durch eine Halterungsanordnung nach Anspruch 1 gelöst, vorteilhafte Ausführungen sind in den Unteransprüchen beschrieben.

Den Kern der Erfindung bildet eine Halterungsanordnung für mobile Endgeräte, die entweder ein mit einer Grundfläche ausgebildetes Gehäuse mit einem Innenraum, der zur Aufnahme eines mobilen Endgerätes ausgebildet ist, oder ein mit einer Grundfläche ausgebildetes Adapterelement, das mit einem mobilen Gerät mechanisch-körperlich verbindbar ausgestaltet ist, umfasst, wobei die Grundfläche auf ihrer Innenseite und ihrer Außenseite mit elektrischen Kontaktmitteln ausgebildet ist, welche derart ausgestaltet und angeordnet sind, dass eine elektrische Verbindung zwischen einem an oder auf der Innenseite der Grundfläche anordenbaren mobilen Endgerät und den auf der Außenseite ausgebildeten Kontaktmitteln herstellbar ist und wobei die Grundfläche von der Außenseite abgewinkelte Randbereiche aufweist, auf denen mindestens zwei Vertiefungen ausgebildet sind, die jeweils zur körperlichen Aufnahme eines Eingriffsmittels ausgestaltet sind. Die Grundfläche ist eine Fläche des Gehäuses oder Adapterelements, an oder auf der das mobile Endgerät anordenbar ist. Die Innenseite bezeichnet diejenige Seite der Grundfläche, an die oder auf der das mobile Endgerät anordenbar ist. Die Außenseite bezeichnet die von der Innenseite abgewandte Seite der Grundfläche. Als Einsenkung oder Vertiefung ist jedwede Einsenkung, Vertiefung, Einbuchtung, Schlitz oder Nut zu verstehen, welche eine körperliche Aufnahme eines korrespondieren Eingriffsmittels ermöglicht. Die mindestens zwei Einsenkungen oder Vertiefungen sind hierbei jeweils derart ausgestaltet, dass sie unter Berücksichtigung der jeweiligen Masse und des beabsichtigten Einsatzzwecks (z.B. stationär oder mobil) eine hinreichend sichere körperliche Fixierung eines vom Gehäuse oder dem Adapterelement aufgenommenen mobilen Endgeräts über korrespondierende Eingriffsmittel ermöglichen. Dies ist im Sinne der Erfindung etwa zur Nutzung als Halter in einem Automobil beispielsweise auch dann gewährleistet, wenn die Grundfläche auf ihrer Außenseite eine einzelne Einsenkung aufweist, die in ihrem Randbereich wiederrum senkrecht zur Eingriffsachse - d.h. in diesem Fall im Wesentlichen parallel zur Grundfläche - zwei schlitzförmige Vertiefungen zur Aufnahme von Haken quer zur Eingriffsrichtung aufweist. Die Einsenkungen oder Vertiefungen sind auf der Außenseite der Grundfläche ausgebildet. Sie können als Einsenkung, Vertiefung, Einbuchtung, Schlitz oder Nut in der Ebene der Grundfläche selbst oder in einem Winkel zu dieser angeordnet sein. Die Erfindung besitzt den Vorteil, dass ein konstruktiv einfach herstellbares und modular konfektionierbares System zur Halterung, Lagerung und Wiederaufladung von unterschiedlichen mobilen Endgeräten sowohl bei deren mobilen Nutzung, als auch an einem stationären Stellort oder -platz geschaffen ist. Die Schnittstelle ermöglicht sowohl die physische Halterung und Lagerung, als auch die elektrische Wiederaufladung von mobilen Endgeräten und ist universell mit unterschiedlichen Gerätetypen verwendbar, indem jeweils entweder ein entsprechend angepasstes Gehäuse oder ein Adapterelement vorhanden ist. Bei der parallelen Nutzung unterschiedlicher mobiler Endgeräte oder einem Gerätewechsel ist jeweils nur die Bereitstellung entsprechender Gehäuse oder Adapterelemente erforderlich, während die Ausgestaltung sämtlicher anderer Komponenten inklusive der Eingriffsmittel gleichbleibt oder diese weiterverwendet werden können. Einen besonderen Vorteil weist die Halterungsanordnung erfindungsgemäß ferner insoweit auf, als die körperliche Halterungsschnittstelle auf Seiten des Gehäuses oder Adapterelements (welche wiederum der Aufnahme des mobilen Endgeräts dienen) lediglich Einsenkungen oder Vertiefungen vorsieht, welche jeweils zur körperlichen Aufnahme eines Eingriffsmittels ausgestaltet sind. Hierdurch ist im Falle der Erforderlichkeit einer sperrbaren körperlichen Verbindung, etwa bei der Halterung eines mobilen Endgeräts in einem Automobil, gewährleistet, dass sämtliche erforderlichen beweglichen Teile außerhalb des Gehäuses oder Adapterelements ausgeführt werden können. Die Ausführung des Gehäuses oder Adapterelements - das jeweils an das bestimmungsgemäß aufzunehmende mobile Endgerät angepasst sein muss - ist hierdurch konstruktiv so einfach wie möglich gehalten. Ferner ist der für das Gehäuse oder Adapterelement - also geräteseitig - funktional erforderliche Bauraum hierdurch so gering wie möglich gehalten, was den ständigen Verbleib des Gehäuses oder Adapterelements am mobilen Endgerät unter Beibehaltung seiner mobilen Handhabbarkeit trotz Schaffung der erfindungsgemäßen Funktionalität ermöglicht.

In einer konstruktiv einfachen Ausführung des Adapterelements ist dieses mit mindestens zwei formelastisch biegbaren Haltearmen ausgebildet, welche derart ausgestaltet und angeordnet sind, dass eine mechanisch-körperliche Verbindung mit einem mobilen Endgerät herstellbar ist, indem die Haltearme dieses an zwei gegenüberliegenden Randseiten formschlüssig umgreifen, wobei das mobile Endgerät an oder auf der Innenseite der Grundfläche anordenbar ist.

Zur konstruktiv einfachen Umsetzung einer modularen Halterung des Gehäuses oder des Adapterelements (und damit eines mobilen Endgerätes) umfasst die Halterungsanordnung ein Halterungselement, das mit mindestens zwei, jeweils mit Einsenkungen oder Vertiefungen auf der Außenseite der Grundfläche korrespondierenden Eingriffsmitteln ausgebildet ist, welche zur Herstellung einer lösbaren form- und/oder kraftschlüssigen Verbindung des Halterungselements mit der Außenseite der Grundfläche ausgestaltet sind. Das Halterungselement stellt das Gegenstück zu der Halterungsschnittstelle des Gehäuses oder Adapterelements dar und ist je nach beabsichtigtem Verwendungszweck ausgebildet (bspw. Befestigung in einem Fahrzeug oder Halterung oder Lagerung an einem stationären Ort).

Zur gleichzeitigen Nutzung als Ladequelle ist das Halterungselement mit Kontaktmitteln ausgebildet, welche zu den auf der Außenseite der Grundfläche des Gehäuses oder des Adapterelements ausgebildeten Kontaktmitteln korrespondierend angeordnet sind und ferner mit einer Anschlusseinrichtung ausgebildet, welche zur Herstellung einer elektrischen Verbindung der Kontaktmittel mit einer Stromquelle ausgestaltet ist.

Um je nach Schnittstellenausstattung eines mit der Halterungsanordnung verwendeten mobilen Endgeräts und ja nach gewünschtem Einsatzzweck etwaige zusätzlich erforderliche Kabelverbindungen entbehrlich zu machen, ist die Anschlusseinrichtung zusätzlich zur Herstellung einer Datenkommunikationsverbindung ausgestaltet.

Eine einfaches Verbinden und Lösen des Gehäuses oder Adapterelements mit dem oder von dem Halterungselement ist gewährleistet, indem zwei Eingriffsmittel aufseiten des Halterungselements hakenförmig ausgestaltet und paarweise zusammenwirkend angeordnet sind, wobei ein Eingriffsmittel starr und das andere Eingriffsmittel zur Herstellung oder zur Lösung der Verbindung des Halterungselements mit der Grundfläche entweder formelastisch biegbar oder gegen eine Federkraft bewegbar ausgestaltet ist und wobei beide Eingriffsmittel bei Bestehen der Verbindung in die jeweils korrespondierenden Vertiefungen auf der Außenseite der Grundfläche eingreifen.

Eine einfache manuelle Bedienung des Verbindens und Lösens des Gehäuses oder Adapterelements mit dem oder vom Halterungselement ist gewährleistet, indem das formelastisch verbiegbar oder gegen eine Federkraft bewegbar ausgestaltete Eingriffsmittel mit einem starr verbundenen Hebelarm und der Hebelarm mit einer Druckfläche ausgebildet ist. Die Druckfläche ist hierzu beispielsweise als mit einer Fingerkuppe bedienbare Taste ausgestaltet, welche über den mit ihr starr verbundenen Hebelarm das Eingriffsmittel bei Druckausübung entweder formelastisch verbiegt oder gegen die Federkraft bewegt, wodurch das Eingreifen oder Lösen des Eingriffsmittels in die oder aus der korrespondierenden Vertiefung erreicht ist.

Zur Verbesserung der Handhabung der Halterungsanordnung sind mindestens zwei Einsenkungen oder Vertiefungen auf der Außenseite der Grundfläche und gleichzeitig mindestens zwei mit diesen korrespondierenden Eingriffsmittel des Halterungselements mit Magnetmitteln ausgebildet, wobei jedem Magnetmittel der Grundfläche in Bezug auf seine Polung und Positionierung jeweils ein Magnetmittel des Halterungselements zugeordnet ist und wobei mindestens zwei Magnetmittel der Grundfläche einerseits und mindestens zwei Magnetmittel des Halterungselements andererseits untereinander jeweils mit einer unterschiedlichen Polung ausgebildet sind. Durch die einander zugeordneten Magnetmittelpaare wird ein zusätzlicher Kraftschluss zwischen dem Gehäuse oder Adapterelement und dem Halterungselement bereitgestellt. Gleichzeitig ist aufgrund der jeweils unterschiedlichen Polung der mindestens zwei Magnetmittel der Grundfläche einerseits und der mindestens zwei Magnetmittel des Halterungselements andererseits sichergestellt, dass das Gehäuse oder Adapterelement und das Halterungselement nur in einer Position miteinander verbunden werden können, da sich die Magnetmittelpaare in einer möglichen falschen Position - bei einer symmetrischen Ausgestaltung beispielsweise gegeneinander um 180° verdreht - abstoßen, anstatt anzuziehen. Aufgrund der magnetischen Abstoßung erhält der Benutzer hierbei zudem relativ früh ein haptisches Feedback bei einer möglichen falschen Positionierung.

Die Verwendung des Halterungselements als mobile Halterungslösung in einem Automobil ist konstruktiv einfach gewährleistet, indem das Halterungselement mit einer Saugnapf-Halterung ausgebildet ist. Mit dem Saugnapf wird das Halterungselement beispielsweise in herkömmlicher Weise an der Innenseite der Windschutzscheibe befestigt.

Eine weitere Verbesserung der Handhabung ist gewährleistet, indem das Halterungselement auf der der Außenseite der Grundfläche abgewandten Seite mit einem pistolenartigen Griff ausgebildet ist, welcher senkrecht oder in einem Winkelbereich von 60° bis 120° gegenüber der Grundfläche ausgerichtet ist. Dies ermöglicht die einfache koordinative Handhabung eines in das Gehäuse oder das Adapterelement eingelegten mobilen Endgeräts entsprechend einer "Pistole". Die Displayseite des mobilen Endgeräts befindet sich hierbei auf der Oberseite der Gesamtkonstruktion - parallel zur Grundfläche des Gehäuses oder des Adapterelements -, wodurch der Benutzer das Display bei der Handhabung einfach per Aufsicht in Augenschein nehmen kann. Es besteht ferner die Möglichkeit, in den pistolenartigen Griff einen Zusatzakkumulator oder eine Zusatzbatterie zur Verlängerung der Betriebszeit eines in das Gehäuse oder das Adapterelement eingelegten und mit diesem verbundenen mobilen Endgeräts zu integrieren.

Eine Erweiterung der modularen Einsatzmöglichkeiten der Halterungsanordnung ist auf konstruktiv einfache Weise erreicht, indem das Halterungselement mit einem Kugelkopf zur Herstellung einer lösbaren form- und/oder kraftschlüssigen Verbindung mit einem weiteren Element ausgebildet ist. Der Kugelkopf dient der form- und/oder kraftschlüssigen Befestigung an einem weiteren, externen Element, dies kann beispielsweise eine Andockstation, eine Saugnapf-Halterung oder ein Stativ sein, welches ein mit dem Kugelkopf korrespondierendes Befestigungsmittel aufweist, beispielsweise feststellbare Backen mit an die Form des Kugelkopfes angepasste Umgriffsflächen oder einen feststellbaren Kugelsitz.

Eine konstruktiv einfach herstellbare Lagerungs- oder Halterungseinrichtung sowie gegebenenfalls auch Wiederaufladungseinrichtung für jeweils ein oder mehrere Gehäuse oder Adapterelemente (und damit mehrere mobile Endgeräte) wird in einer konstruktiv einfachen Ausgestaltung bereitgestellt, indem die Halterungsanordnung eine als Wand-, Tisch- oder Schrankhalterung ausgebildete, Lagerungs- oder Halterungseinrichtung mit ein oder mehreren Lagerungs- oder Halterungsstellen umfasst, und wobei jede Lagerungs- oder Halterungsstelle jeweils als Halterungselement in einer der vorstehend beschriebenen Ausführungen ausgebildet ist.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigen:
- Fig. 1: eine perspektivische Darstellung eines Adapterelements;
- Fig. 2: eine perspektivische Darstellung eines mobilen Endgeräts und mit ihm verbundenen Adapterelement nach Fig. 1,
- Fig. 3: eine perspektivische Darstellung eines Halterungselements;
- Fig. 4: eine perspektivische Darstellung des Adapterelements nach Fig. 1 und des Halterungselements nach Fig. 3;
- Fig. 5: eine weitere perspektivische Darstellung des Adapterelements nach Fig. 1 und des Halterungselements nach Fig. 3;
- Fig. 6: eine perspektivische Darstellung des mobilen Endgeräts und mit ihm verbundenen Adapterelements nach Fig. 1 sowie dem mit dem Adapterelement verbundenen Halterungselement nach Fig. 3;
- Fig. 7: eine perspektivische Darstellung eines Gehäuses;
- Fig. 8: eine perspektivische Darstellung des Gehäuses nach Fig. 7 sowie des dem mit dem Gehäuse verbundenen Halterungselements nach Fig. 3;
- Fig. 9: eine perspektivische Darstellung einer Saugnapfhalterung;
- Fig. 10: eine perspektivische Darstellung des Gehäuses nach Fig. 7 sowie einer mit dem Gehäuse verbundenen Einzeltischhalterung;
- Fig. 11: eine perspektivische Darstellung des Gehäuses nach Fig. 7 sowie einer mit dem Gehäuse verbundenen Einzelwandhalterung;
- Fig. 12: eine perspektivische Darstellung mehrerer Gehäuse sowie einer mit den Gehäusen verbundenen Mehrgerätetischhalterung;
- Fig. 13: eine perspektivische Darstellung mehrerer Gehäuse sowie einer mit den Gehäusen verbundenen Mehrgerätewandhalterung;
- Fig. 14: eine perspektivische Darstellung mehrerer Gehäuse sowie eines mit den Gehäusen verbundenen Mehrgeräteschranks.
- Fig. 15: eine perspektivische Darstellung eines weiteren Adapterelements;
- Fig. 16: eine perspektivische Darstellung eines weiteren Halterungselements;
- Fig. 17: eine perspektivische Darstellung eines weiteren Gehäuses.

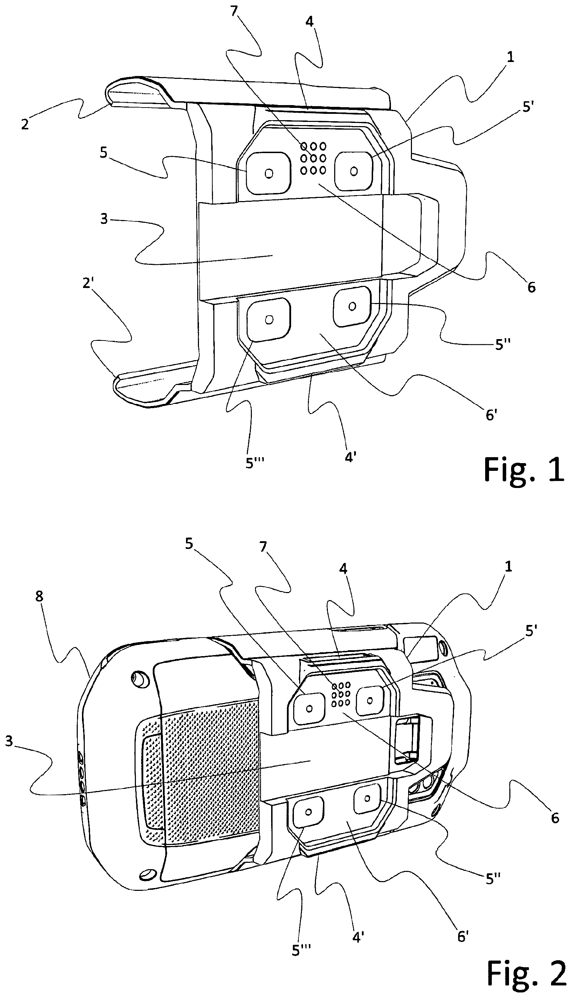

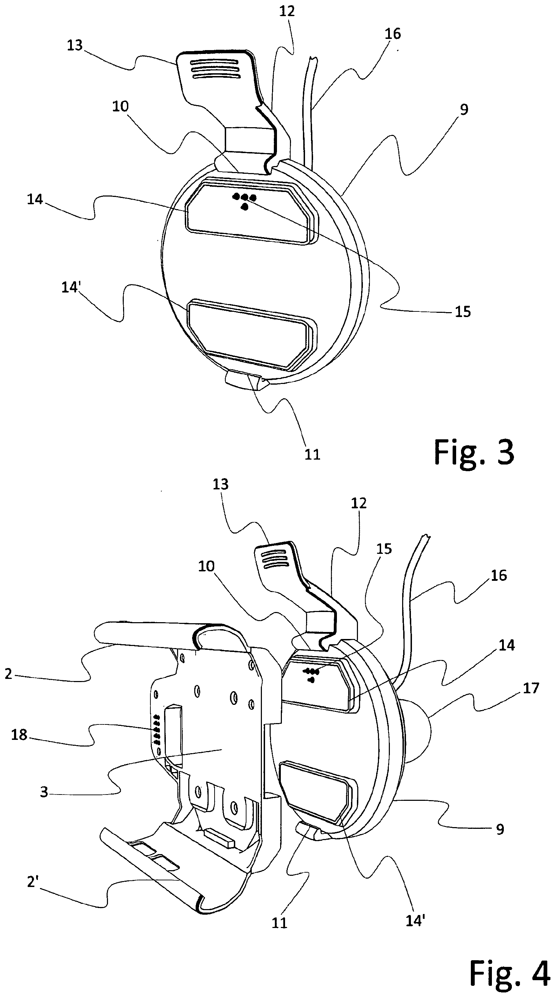

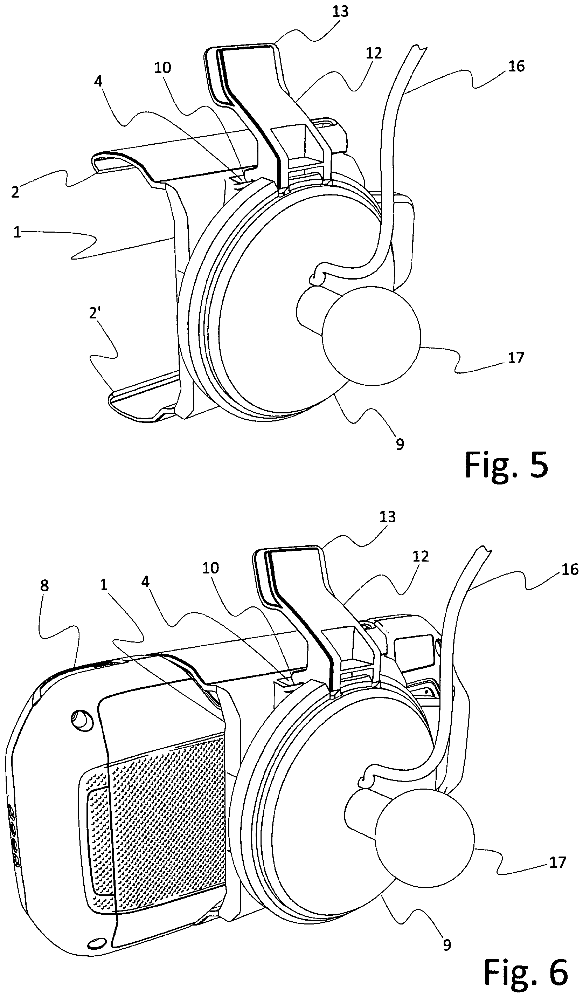

Die Fig. 1 und Fig. 2 zeigen das Adapterelement 1, welches mit zwei formelastisch biegbaren Haltearmen 2 und 2' ausgebildet ist. Das Adapterelement 1 ist mit der Grundfläche 3 ausgebildet. Randseitig ist die Grundfläche 3 auf ihrer Außenseite mit zwei schlitzförmigen Vertiefungen 4 und 4' ausgebildet, welche parallel zur Ebene der Grundfläche 3 angeordnet sind. Ferner ist die Grundfläche 3 auf ihrer Außenseite zusätzlich mit vier Einsenkungen 5 bis 5‴ ausgebildet, welche innerhalb zweier weiterer, innerhalb der Grundfläche 3 zentral angeordneter Einsenkungsbereiche 6 und 6' angeordnet sind. Schließlich ist die Grundfläche 3 auf ihrer Außenseite mit den Kontaktmitteln 7 ausgebildet, welches ein Feld von neun weiblichen Kontakten in Form zylindrischer Vertiefungen zur Aufnahme korrespondierender männlicher Kontaktstifte ist. Die Fig. 2 zeigt das Adapterelement 1, welches mit dem mobilen Endgerät 8 mechanisch-körperlich verbunden ist. Hierbei umgreifen die Haltearme 2 und 2' das mobile Endgerät 8 an zwei gegenüberliegenden Randseiten formschlüssig. Fig. 3 zeigt das Halterungselement 9. Das Halterungselement 9 ist mit zwei hakenförmigen Eingriffsmitteln 10 und 11 ausgebildet, welche mit den schlitzförmigen Vertiefungen 4 und 4' korrespondieren. Die beiden hakenförmigen Eingriffsmittel 10 und 11 des Halterungselements 9 sind paarweise zusammenwirkend angeordnet, um gegenläufig fixierend auf ein Werkstück zu wirken, in dessen korrespondierende Vertiefungen sie eingreifen. Das hakenförmige Eingriffsmittel 10 ist formelastisch biegbar ausgestaltet und mit dem Hebelarm 12 verbunden. Der Hebelarm 12 ist an seinem Ende als Druckfläche mit der Taste 13 ausgebildet. Das hakenförmige Eingriffsmittel 11 ist starr ausgebildet. Die Herstellung oder Lösung einer formschlüssigen Verbindung der hakenförmigen Eingriffsmittel 10 und 11mit den mit den schlitzförmigen Vertiefungen 4 und 4' erfolgt durch manuellen Druckausübung auf die Taste 13 - beispielsweise mit einer Fingerkuppe - wobei sich der Hebelarm 12 nach hinten verbiegt und das mit diesem verbundene hakenförmige Eingriffsmittel 10 seine Position nach oben verlagert und die mit ihm korrespondierende schlitzförmige Vertiefung 4 verlassen kann. Bei Entlastung der Taste 13 bewegt sich der Hebelarm 11 nach vorne in seine Ruhestellung zurück, wobei das mit ihm verbundene hakenförmige Eingriffsmittel 10 seine Position nach unten verlagert und in die schlitzförmige Vertiefung 4 eingreifen kann. Ferner ist das Halterungselement 9 zusätzlich mit den Eingriffsmitteln 14 und 14' ausgebildet, welche als Ausbuchtungen ausgestaltet sind und die mit den Einsenkungsbereichen 6 und 6' korrespondieren. Die Eingriffsrichtung der Eingriffsmittel 14 und 14' in die korrespondierenden Einsenkungsbereiche 6 und 6' definieren hierbei eine Eingriffsachse im Sinne der Erfindung. Gegenüber dieser Eingriffsachse sind die schlitzförmigen Vertiefungen 4 und 4' senkrecht angeordnet. Schließlich ist das Halterungselement 9 mit den Kontaktmitteln 15 ausgebildet, welche als Feld von vier männlichen Kontaktstiften ausgestaltet sind, die korrespondierend zu den Kontaktmitteln 7 angeordnet sind. Zudem ist das Halterungselement 9 mit der als Kabel 16 ausgebildeten Anschlusseinrichtung ausgebildet, welche zur Herstellung einer elektrischen Verbindung der Kontaktmittel 15 mit einer Stromquelle, beispielsweise einem Zigarettenanzünder in einem Kraftfahrzeug, ausgestaltet ist. Das Halterungselement 9 kann als Teil der Anschlusseinrichtung darüber hinaus weitere elektrische oder elektronische Komponenten, wie beispielweise eine Elektronik zur Regelung/oder Anpassung einer anliegenden Versorgungsspannung oder Stromstärke umfassen. Ferner kann das Kabel 16 zusätzlich zur Spannungsversorgung auch zur Herstellung einer Datenkommunikationsverbindung, beispielsweise mit der Bordelektronik eines Automobils, ausgestaltet sein. Hierbei können die Kontaktmittel 15 und/oder auch die Kontaktmittel 7 weitere Kontaktstifte oder weibliche Kontakte in Form zylindrischer Vertiefungen umfassen, um insgesamt die für die gewünschten elektrischen oder elektronischen Verbindungen erforderlichen Leitungen abzubilden. Fig. 4. zeigt das Halterungselement 9 gemeinsam mit dem zu verbindenden Adapterelement 1. Das Halterungselement 9 ist auf seiner Rückseite - das heißt, der dem Adapterelement 1 abgewandten Seite - mit dem Kugelkopf 17 ausgebildet. Der Kugelkopf 17 dient der körperlichen Verbindung mit weiteren Elementen, beispielsweise einer Saugnapf-Halterung zur lösbaren Befestigung des Halterungselements 9 an der Innenseite einer Windschutzscheibe. Anstatt mit dem Kugelkopf 17 kann das Halterungselement 9 bspw. auch direkt mit einem Befestigungsmittel wie beispielsweise einer Saugnapf-Halterung, ausgebildet sein. Auf der Innenseite seiner Grundfläche 3 ist das Adapterelement 1 mit den Kontaktmitteln 18 ausgebildet, die als Feld von mehreren männlichen Kontaktstiften ausgestaltet sind. Die Kontaktmittel 18 dienen der elektrischen und/oder elektronischen Verbindung des mobilen Endgeräts 8 mit den Kontaktmitteln 7 auf der Außenseite der Grundfläche 3. Fig. 5 zeigt die körperliche Verbindung des Halterungselements 9 mit dem Adapterelement 1 in einer rückwärtigen perspektivischen Ansicht. Das hakenförmige Eingriffsmittel 10 greift bei Entlastung der Taste 13, bei sich der Hebelarm 12 in seiner Ruhestellung befindet, formschlüssig in die Vertiefung 4 ein. Gleichzeitig greift das hakenförmige Eingriffsmittel 11 in die Vertiefung 4' ein, was in Fig. 5 perspektivisch bedingt nicht dargestellt ist. Fig. 6 zeigt die körperliche Verbindung des Halterungselements 9 mit dem Adapterelement 1 und des Adapterelements 1 mit dem mobilen Endgerät 8 in einer rückwärtigen perspektivischen Ansicht. die Haltearme 2 und 2' umgreifen das mobile Endgerät 8 an zwei gegenüberliegenden Randseiten formschlüssig.

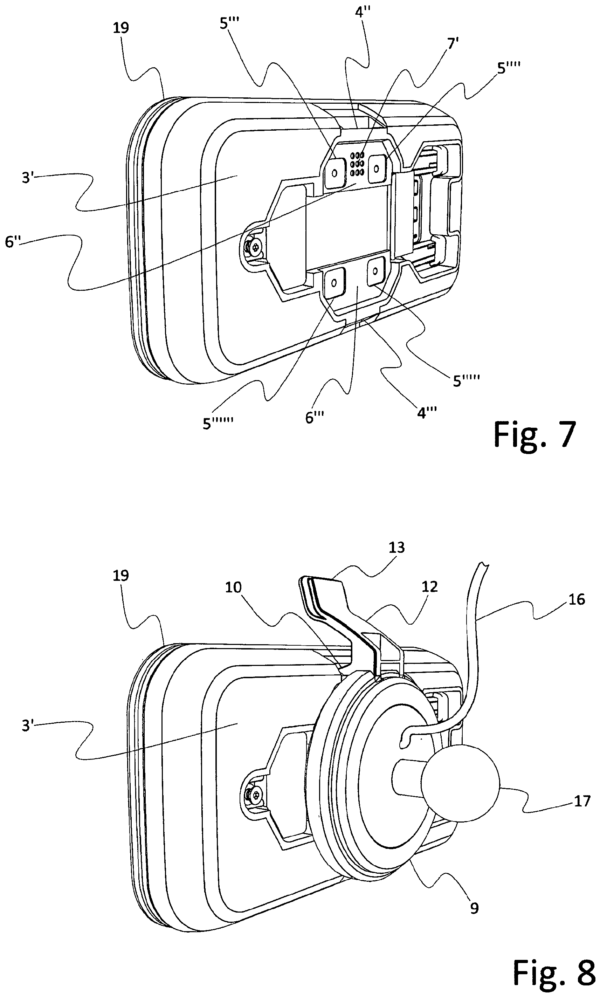

Die Fig. 7 und 8 zeigen eine weitere Ausführungsform der Halterungsanordnung mit dem Gehäuse 19 in einer rückwärtigen perspektivischen Ansicht. Das Gehäuse 19 ist mit der Grundfläche 3' ausgebildet. Das Gehäuse 19 ist zur Aufnahme eines mobilen Endgerätes ausgebildet. Randseitig ist die Grundfläche 3' auf ihrer Außenseite mit zwei schlitzförmigen Vertiefungen 4" und 4‴ ausgebildet, welche parallel zur Ebene der Grundfläche 3' angeordnet sind. Ferner ist die Grundfläche 3' auf ihrer Außenseite zusätzlich mit vier Einsenkungen 5ʺʺ bis 5‴ʺʺ ausgebildet, welche innerhalb zweier weiterer, innerhalb der Grundfläche 3' zentral angeordneter Einsenkungsbereiche 6" und 6‴ angeordnet sind. Schließlich ist die Grundfläche 3' auf ihrer Außenseite mit den Kontaktmitteln 7' ausgebildet, welches ein Feld von neun weiblichen Kontakten in Form zylindrischer Vertiefungen zur Aufnahme korrespondierender männlicher Kontaktstifte ist. Auf der Innenseite seiner Grundfläche 3' ist das Gehäuse 19 mit weiteren Kontaktmitteln ausgebildet, die der elektrischen und/oder elektronischen Verbindung eines vom Gehäuse 19 aufgenommenen mobilen Endgeräts mit den Kontaktmitteln 7' auf der Außenseite der Grundfläche 3' dienen. Die Fig. 8 zeigt das Gehäuse 18, welches mit dem Halterungselement 9 mechanisch-körperlich verbunden ist, in einer rückwärtigen perspektivischen Ansicht. Das hakenförmige Eingriffsmittel 10 greift bei Entlastung der Taste 13, bei sich der Hebelarm 10 in seiner Ruhestellung befindet, formschlüssig in die Vertiefung 4" ein. Gleichzeitig greift das hakenförmige Eingriffsmittel 11 in die Vertiefung 4‴ ein, was in Fig. 8 perspektivisch bedingt nicht dargestellt ist. Gleichzeitig sind hierbei die Kontaktmittel 7' mit den Kontaktmitteln 15 elektrisch verbunden, was in Fig. 8 perspektivisch bedingt nicht dargestellt ist.

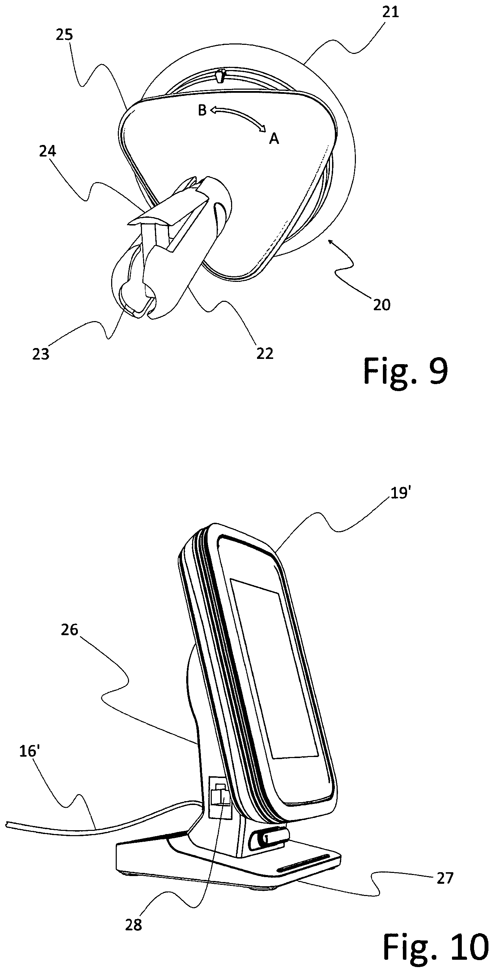

Fig. 9 zeigt als weiteres Element der Halterungsanordnung die Saugnapf-Halterung 20. Die Saugnapf-Halterung 20 umfasst den Saugnapf 21 und den im Wesentlichen zylindrischen Hohlkörper 22 mit der kreisrunden Öffnung 23 zur Aufnahme des Kugelkopfes 17. Die lösbare Arretierung des Kugelkopfes 17 im Hohlkörper 22 erfolgt durch Öffnen oder Schließen des Arretierungsbügels 24. Die Befestigung der Saugnapf-Halterung 20 an einer Windschutzscheibe erfolgt durch Andrücken und Drehen der Dreiecksscheibe 25 entsprechend der Pfeilrichtung A, wodurch der Saugnapf 21 eingedrückt und Luft aus diesem verdrängt wird. Es entsteht ein Unterdruck zwischen dem Innenraum des Saugnapfs 21 und der Windschutzscheibe. Das Lösen der Saugnapf-Halterung 20 von der Windschutzscheibe erfolgt durch Drehen der Dreiecksscheibe 25 entsprechend der Pfeilrichtung B, wodurch eine Öffnung (nicht dargestellt) freigegeben wird und Luft in den Saugnapf 21 eindringt, bis ein Druckausgleich mit der Atmosphäre hergestellt ist.

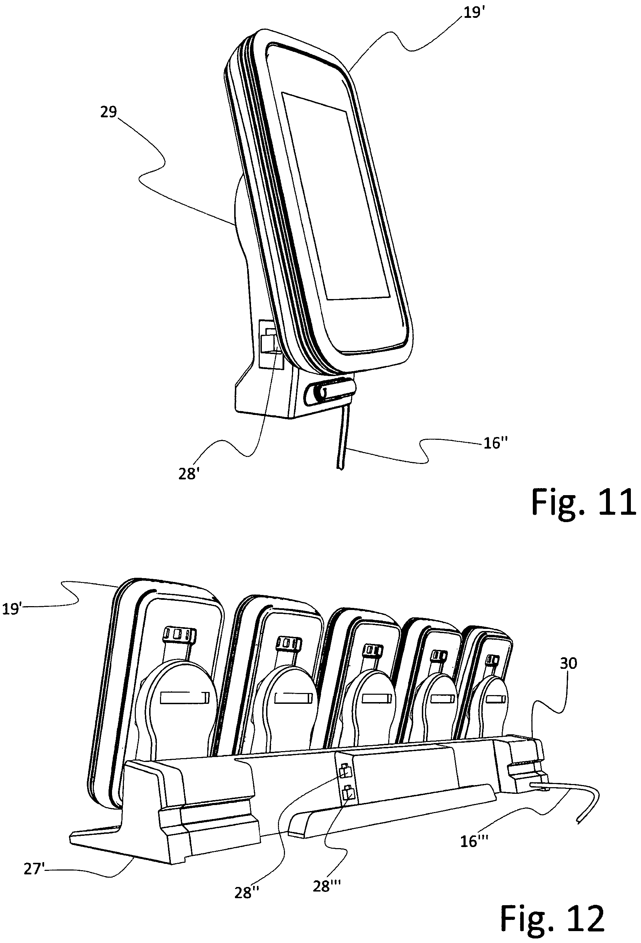

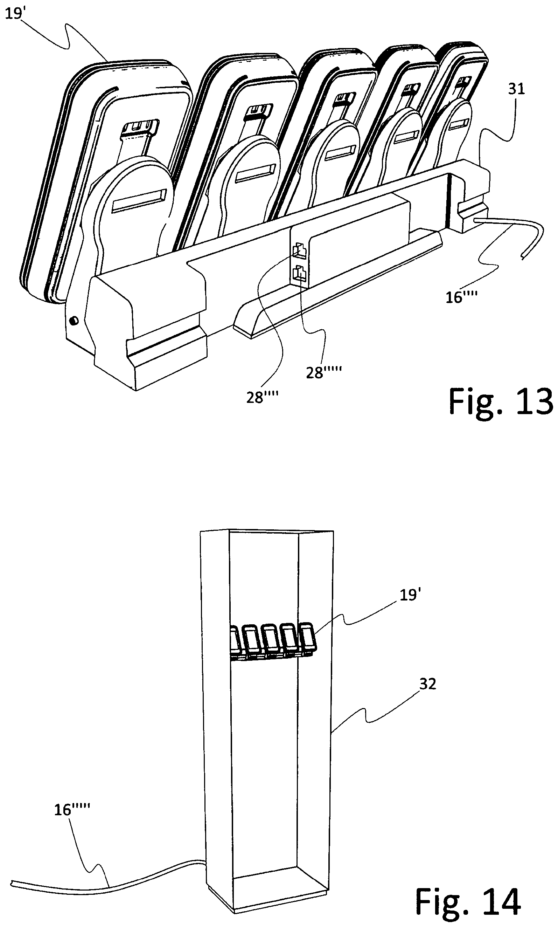

Die Fig. 10 bis Fig. 15 zeigen mehrere verschiedene Ausführungen von jeweils als Wand-, Tisch- oder Schrankhalterung ausgebildeten Lagerungs- oder Halterungseinrichtungen mit jeweils ein oder mehreren Lagerungs- oder Halterungsstellen. Die Lagerungs- oder Halterungsstellen sind jeweils als ein Halterungselement mit mindestens zwei, jeweils mit den Vertiefungen 4 bis 4‴, und/oder den Einsenkungen 5 bis 5‴ʺʺ und/oder den Einsenkungsbereichen 6 bis 6‴ korrespondierenden Eingriffsmitteln ausgebildet. Da die als Wand-, Tisch- oder Schrankhalterung ausgebildeten Lagerungs- oder Halterungseinrichtungen der Fig. 10 bis Fig. 15 jeweils als stationäre Lagerungs- oder Halterungsorte dienen, reichen zur Herstellung einer hinreichend stabilen Verbindung mit den Gehäusen oder Adapterelementen jeweils beispielsweise auch einfache, nicht sperrende formschlüssige Eingriffsmittel entsprechend den Eingriffsmitteln 14 und 14' und/oder mit den Einsenkungen 5 bis 5‴ʺʺ korrespondierende Eingriffsmittel aus. Ferner sind die Lagerungs- oder Halterungsstellen jeweils mit zu den Kontaktmitteln 7 und 7' korrespondierenden Kontaktmitteln - entsprechend den Kontaktmitteln 15 - ausgebildet, und mit Anschlusseinrichtungen ausgebildet, welche zur Herstellung einer elektrischen Verbindung mit einer Stromquelle sowie einer Datenkommunikationsverbindung ausgestaltet sind. Die Fig. 10 bis Fig. 15 zeigen hierbei jeweils Ausführungen der Lagerungs- oder Halterungseinrichtungen im Zusammenwirken mit einem oder mehreren dem Gehäuse 19 im Wesentlichen entsprechenden Gehäusen. Die Lagerungs- oder Halterungseinrichtungen der Fig. 10 bis Fig. 15 sind hierbei bei jedoch gleichfalls zum Zusammenwirken mit einem oder mehreren dem Adapterelement 1 entsprechenden Adapterelementen geeignet. Fig. 10 zeigt die Einzeltischhalterung 26 mit dem Standfuß 27 und dem Gehäuse 19'. Ferner umfasst die Einzeltischhalterung 26 den Datenkommunikationsanschluss 28 und das der Spannungsversorgung dienende Kabel 16'. Fig. 11 zeigt die Einzelwandhalterung 29 mit dem Gehäuse 19'. Ferner umfasst die Einzelwandhalterung 29 den Datenkommunikationsanschluss 28' und das der Spannungsversorgung dienende Kabel 16". Fig. 12 zeigt die Mehrgerätetischhalterung 30 mit dem Standfuß 27' und dem Gehäuse 19' sowie weiteren, dem Gehäuse 19' entsprechenden Gehäusen. Ferner umfasst die Mehrgerätetischhalterung 30 die Datenkommunikationsanschlüsse 28" und 28‴ und das der Spannungsversorgung dienende Kabel 16‴. Fig. 13 zeigt die Mehrgerätewandhalterung 31 und dem Gehäuse 19' sowie weiteren, dem Gehäuse 19' entsprechenden Gehäusen. Ferner umfasst die Mehrgerätewandhalterung 31 die Datenkommunikationsanschlüsse 28ʺʺ und 28‴ʺ und das der Spannungsversorgung dienende Kabel 16ʺʺ. Fig. 14 zeigt den Mehrgeräteschrank 32 und das Gehäuse 19' sowie weiteren, dem Gehäuse 19' entsprechende Gehäuse. Der Mehrgeräteschrank 32 umfasst ferner das der Spannungsversorgung dienende Kabel 16‴ʺ.

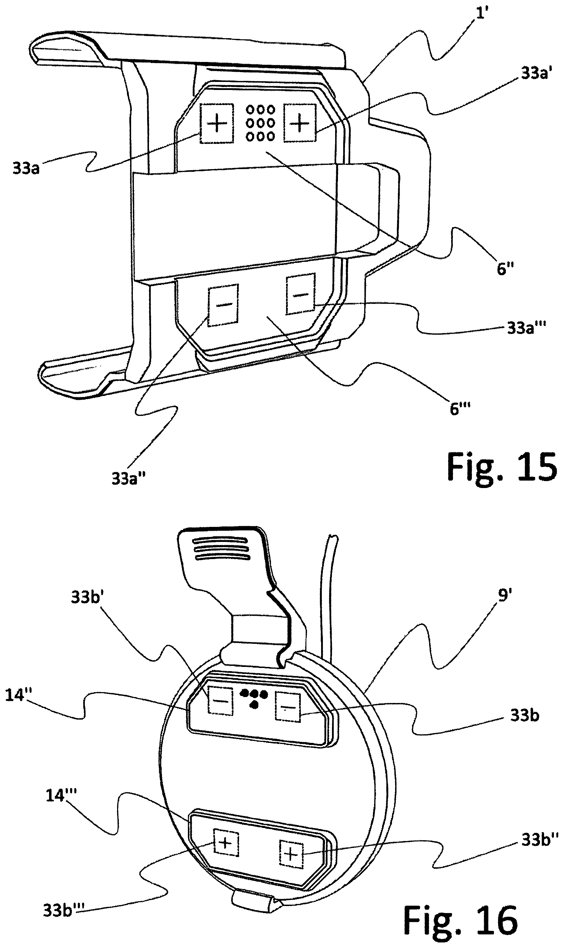

Die Fig. 15 und 16 zeigen das Adapterelement 1' und das Halterungselement 9'. Das Adapterelement 1' und das Halterungselement 9' sind leicht abgewandelte Ausführungen des Adapterelements 1 gemäß Fig. 1 und des Halterungselements 9 gemäß Fig. 3. Das Adapterelement 1' weist im Gegensatz zum Adapterelement 1 gemäß der Fig. 1 keine Einsenkungen 5, 5', 5" und 5‴ auf. Im Gegensatz zum Adapterelement 1 gemäß der Fig. 1 ist das Adapterelement 1' mit vier Magnetmitteln 33a, 33a', 33a" und 33a‴ ausgebildet, deren Position innerhalb der Einsenkungsbereiche 6" und 6‴ in Fig. 15 schematisch eingezeichnet ist. Ferner ist jeweils die Polung der Magnetmittel 33a - 33a‴ in Figur 15 eingezeichnet. Im Übrigen ist das Adapterelement 1' entsprechend dem Adapterelement 1 ausgeführt. Das Halterungselement 9' ist im Gegensatz zum Halterungselement 9 gemäß der Fig. 3 mit vier Magnetmitteln 33b, 33b', 33b" und 33b‴ ausgebildet, deren Position innerhalb der Eingriffsmittel 14" und 14‴ in Fig. 16 schematisch eingezeichnet ist. Ferner ist jeweils die Polung der Magnetmittel 33b - 33b‴ in Figur 16 eingezeichnet. Im Übrigen ist das Halterungselement 9 'entsprechend dem Halterungselement 9 ausgeführt. Jedem der Magnetmittel 33a' - 33a‴ des Adapterelements 1' ist in Bezug auf seine Polung und Positionierung jeweils eines der Magnetmittel 33b - 33b‴ des Halterungselements 9' zugeordnet. Durch die einander zugeordneten Magnetmittelpaare 33a/33b, 33a'/33b', 33a"/33b" und 33a‴/33b‴wird ein magnetischer Kraftschluss zwischen dem Adapterelement 1' und dem Halterungselement 9' bereitgestellt. Hierbei sind die Magnetmittel 33 und 33' einerseits und die Magnetmittel 33" und 33‴ anderseits des Adapterelements 1' mit einer unterschiedlichen Polung ausgebildet. Gleichzeitig sind auch die Magnetmittel 33b und 33b' einerseits und die Magnetmittel 33b" und 33b‴ andererseits des Halterungselements 9' mit einer unterschiedlichen Polung ausgeführt.

Hierdurch ist sichergestellt, dass das Adapterelement 1' und das Halterungselement 9' nur in einer Position miteinander verbunden werden können, da sich die Magnetmittelpaare in einer möglichen falschen Position - gegeneinander um 180° verdreht - abstoßen, anstatt gegenseitig anzuziehen. Aufgrund der magnetischen Abstoßung in der gegeneinander um 180° verdrehten Position erhält der Benutzer hierbei zudem relativ früh ein haptisches Feedback beim Versuch einer falschen Positionierung.

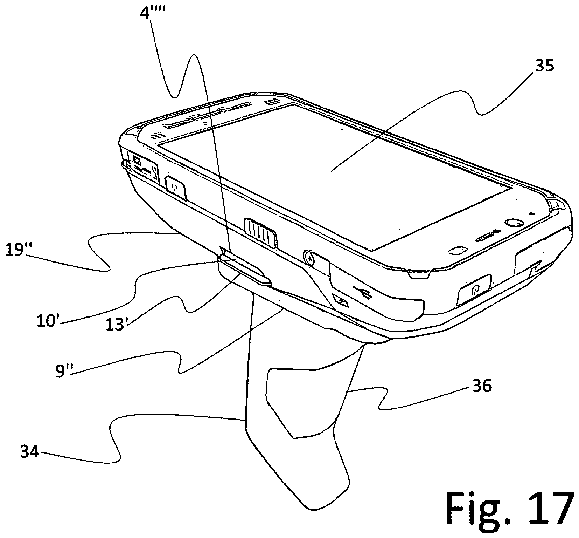

Die Fig. 17 zeigt das Gehäuse 19". Das Gehäuse 19" ist entsprechend dem Gehäuse 19 der Figuren 7 und 8 ausgeführt und unter anderem mit zwei schlitzförmigen Vertiefungen ausgeführt, von denen in Fig. 17 perspektivisch bedingt lediglich die Vertiefung 4ʺʺ erkennbar ist. Das Gehäuse ist mechanisch-körperlich mit dem Halterungselement 9" verbunden. Hierbei greift das hakenförmige Eingriffsmittel 10' des Halterungselements 9" in die Vertiefung 4ʺʺ ein. Auf der gegenüberliegenden Längsseite des Gehäuses 19" greift - was perspektivisch bedingt in Fig. 17 nicht erkennbar ist - ein entsprechendes weiteres hakenförmiges Eingriffsmittel des Halterungselements 9" in eine korrespondierende schlitzförmige Vertiefung im Gehäuse 19" ein. Der Eingriff des das hakenförmigen Eingriffsmittels 10' in die Vertiefung 4"" lässt sich durch Belastung der Taste 13' lösen. Das Halterungselement 9" ist auf seiner - an der Außenseite der Grundfläche des Gehäuses 19" anliegenden und in Fig. 17 nicht erkennbaren - Oberseite im Übrigen entsprechend dem Halterungselement 9 gemäß Fig. 3 ausgeführt. Auf seiner der Außenseite der Grundfläche des Gehäuses 19" abgewandten Seite ist das Halterungselement 9" mit einem pistolenartigen Griff 34 ausgebildet, der im Wesentlichen senkrecht gegenüber der Grundfläche des Gehäuses 19" ausgerichtet ist. Dies ermöglicht die einfache koordinative Handhabung eines in das Gehäuse 19" eingelegten mobilen Endgeräts entsprechend einer "Pistole". Die Displayseite des mobilen Endgeräts befindet sich hierbei innerhalb des auf der Oberseite des Gehäuses 19" angeordneten Sichtbereichs 35, wodurch der Benutzer das Display bei der Handhabung einfach per Aufsicht in Augenschein nehmen kann. Der pistolenartige Griff ist ferner mit einer Abdeckklappe 36 ausgebildet, unter welcher einen Zusatzakkumulator in den Griff 34 eingesetzt ist. Der Zusatzakkumulator dient der Verlängerung der Betriebszeit eines in das Gehäuse 19" eingelegten mobilen Endgeräts, wobei er über den Kontaktmitteln 15 des Halterungselements 9 gemäß Fig. 3 entsprechende Kontaktmittel mit dem Gehäuse 19" verbunden ist.

### Bezugszeichenliste

- 1, 1': Adapterelement
- 2, 2': Haltearme
- 3: Grundfläche
- 4, 4', 4", 4‴, 4ʺʺ: Vertiefungen
- 5, 5, 5", 5‴, 5 5‴ʺ, 5‴‴, 5‴ʺʺ: Einsenkungen
- 6, 6', 6", 6‴: Einsenkungsbereiche
- 7, 7': Kontaktmittel Grundfläche Außenseite
- 8: Mobiles Endgerät
- 9, 9', 9": Halterungselement
- 10, 10', 11, 14, 14', 14'', 14‴: Eingriffsmittel
- 12: Hebelarm
- 13, 13': Taste
- 15: Kontaktmittel Halterungselement
- 16, 16', 16", 16"', 16ʺʺ: Kabel
- 17: Kugelkopf
- 18: Kontaktmittel Grundfläche Innenseite
- 19, 19', 19": Gehäuse
- 20: Saugnapf-Halterung
- 21: Saugnapf
- 22: Hohlkörper
- 23: Öffnung
- 24: Arretierungsbügel
- 25: Dreiecksscheibe
- 26: Einzeltischhalterung
- 27, 27': Standfuß
- 28, 28', 28", 28"', 28"", 28‴ʺ: Datenkommunikationsanschluss
- 29: Einzelwandhalterung
- 30: Mehrgerätetischhalterung
- 31: Mehrgerätewandhalterung
- 32: Mehrgeräteschrank
- 33a, 33a', 33a'', 33a‴, 33b, 33b', 33b", 33b‴: Magnetmittel
- 34: Griff
- 35: Sichtbereich
- 36: Abdeckklappe

## Patentansprüche

1. Halterungsanordnung für mobile Endgeräte, umfassend entweder ein mit einer Grundfläche ausgebildetes Gehäuse mit einem Innenraum, der zur Aufnahme eines mobilen Endgerätes ausgebildet ist, oder ein mit einer Grundfläche ausgebildetes Adapterelement, das mit einem mobilen Gerät mechanisch-körperlich verbindbar ausgestaltet ist, wobei die Grundfläche (3) auf ihrer Innenseite und ihrer Außenseite mit elektrischen Kontaktmitteln (7, 7', 18) ausgebildet ist, welche derart ausgestaltet und angeordnet sind, dass eine elektrische Verbindung zwischen einem an oder auf der Innenseite der Grundfläche (3) anordenbaren mobilen Endgerät und den auf der Außenseite ausgebildeten Kontaktmitteln (7, 7") herstellbar ist, **dadurch gekennzeichnet, dass** die Grundfläche (3) von der Außenseite abgewinkelte Randbereiche aufweist, auf denen mindestens zwei Vertiefungen (4, 4', 4", 4‴, 4ʺʺ) ausgebildet sind, die jeweils zur körperlichen Aufnahme eines Eingriffsmittels (10, 10', 11) parallel zur Ebene der Grundfläche (3) ausgestaltet sind, wobei die Vertiefungen (4, 4', 4", 4‴, 4ʺʺ) jeweils über eine schlitzförmige Öffnung zugänglich sind, die in einer Ebene senkrecht zur Grundfläche angeordnet ist.

2. Halterungsanordnung nach Anspruch 1 mit einem Adapterelement, **dadurch gekennzeichnet, dass** das Adapterelement (1, 1') mit mindestens zwei formelastisch biegbaren Haltearmen (2, 2') ausgebildet ist, welche derart ausgestaltet und angeordnet sind, dass eine mechanisch-körperliche Verbindung mit einem mobilen Endgerät herstellbar ist, indem die Haltearme (2, 2') dieses an zwei gegenüberliegenden Randseiten formschlüssig umgreifen, wobei das mobile Endgerät an oder auf der Innenseite der Grundfläche (3) anordenbar ist.

3. Halterungsanordnung nach Anspruch 1 oder 2, **dadurch gekennzeichnet, dass** die Halterungsanordnung ein Halterungselement (9, 9', 9") umfasst, das mit mindestens zwei, jeweils mit den Vertiefungen (4, 4', 4", 4"', 4ʺʺ) auf der Außenseite der Grundfläche (3) korrespondierenden Eingriffsmitteln (10, 10', 11) ausgebildet ist, welche zur Herstellung einer lösbaren form- und/oder kraftschlüssigen Verbindung des Halterungselements (9, 9', 9") mit der Außenseite der Grundfläche (3) ausgestaltet sind.

4. Halterungsanordnung nach Anspruch 3, **dadurch gekennzeichnet, dass** das Halterungselement (9, 9', 9") mit Kontaktmitteln (15) ausgebildet ist, welche zu den auf der Außenseite der Grundfläche (3) des Gehäuses (19, 19', 19") oder des Adapterelements (1, 1') ausgebildeten Kontaktmitteln (7, 7") korrespondierend angeordnet sind und das Halterungselement (9, 9', 9") ferner mit einer Anschlusseinrichtung ausgebildet ist, welche zur Herstellung einer elektrischen Verbindung der Kontaktmittel (15) mit einer Stromquelle ausgestaltet ist.

5. Halterungsanordnung nach Anspruch 4, **dadurch gekennzeichnet, dass** die Anschlusseinrichtung zusätzlich zur Herstellung einer Datenkommunikationsverbindung ausgestaltet ist.

6. Halterungsanordnung nach einem der Ansprüche 3 bis 5, **dadurch gekennzeichnet, dass** zwei Eingriffsmittel (10, 10', 11, 14, 14', 14", 14‴) hakenförmig ausgestaltet und paarweise zusammenwirkend angeordnet sind, wobei ein Eingriffsmittel (10, 10', 11, 14, 14', 14", 14‴) starr und das andere Eingriffsmittel (10, 10', 11, 14, 14', 14", 14‴) zur Herstellung oder zur Lösung der Verbindung des Halterungselements (9, 9', 9") mit der Grundfläche (3) entweder formelastisch biegbar oder gegen eine Federkraft bewegbar ausgestaltet ist und wobei beide Eingriffsmittel (10, 10', 11, 14, 14', 14", 14‴) bei Bestehen der Verbindung in die jeweils korrespondierenden Vertiefungen (4, 4', 4", 4‴, 4ʺʺ) auf der Außenseite der Grundfläche (3) eingreifen.

7. Halterungsanordnung nach Anspruch 6, **dadurch gekennzeichnet, dass** das formelastisch verbiegbar oder gegen eine Federkraft bewegbar ausgestaltete Eingriffsmittel (10, 10', 11, 14, 14', 14", 14‴) mit einem starr verbundenen Hebelarm (12) und der Hebelarm (12) mit einer Druckfläche ausgebildet ist.

8. Halterungsanordnung nach einem der Ansprüche 3 bis 7, **dadurch gekennzeichnet, dass** mindestens zwei Einsenkungen (5, 5', 5", 5‴, 5ʺʺ, 5‴ʺ, 5‴‴, 5‴ʺʺ, 6, 6', 6", 6‴) oder Vertiefungen (4, 4', 4", 4‴, 4ʺʺ) auf der Außenseite der Grundfläche (3) und gleichzeitig mindestens zwei mit diesen korrespondierenden Eingriffsmittel (10, 10', 11, 14, 14', 14", 14‴) des Halterungselements (9, 9', 9") mit Magnetmitteln (33a, 33a', 33a", 33a‴, 33b, 33b', 33b", 33b‴) ausgebildet sind, wobei jedem Magnetmittel (33a, 33a', 33a", 33a‴, 33b, 33b', 33b", 33b‴) der Grundfläche (3) in Bezug auf seine Polung und Positionierung jeweils ein Magnetmittel (33a, 33a', 33a", 33a‴, 33b, 33b', 33b", 33b‴) des Halterungselements (9, 9', 9") zugeordnet ist und wobei mindestens zwei Magnetmittel (33a, 33a', 33a", 33a‴, 33b, 33b', 33b", 33b‴) der Grundfläche (3) einerseits und mindestens zwei Magnetmittel (33a, 33a', 33a", 33a‴, 33b, 33b', 33b", 33b‴) des Halterungselements (9, 9', 9") andererseits untereinander jeweils mit einer unterschiedlichen Polung ausgebildet sind.

9. Halterungsanordnung nach einem der Ansprüche 3 bis 8, **dadurch gekennzeichnet, dass** das Halterungselement (9, 9', 9") mit einer Saugnapf-Halterung (20) ausgebildet ist.

10. Halterungsanordnung nach einem der Ansprüche 3 bis 8, **dadurch gekennzeichnet, dass** das Halterungselement auf der der Außenseite der Grundfläche (3) abgewandten Seite mit einem pistolenartigen Griff (34) ausgebildet ist, welcher senkrecht oder in einem Winkelbereich von 60° bis 120° gegenüber der Grundfläche (3) ausgerichtet ist.

11. Halterungsanordnung nach einem der Ansprüche 3 bis 8, **dadurch gekennzeichnet, dass** das Halterungselement (9, 9', 9") mit einem Kugelkopf (17) zur Herstellung einer lösbaren form- und/oder kraftschlüssigen Verbindung mit einem weiteren Element ausgebildet ist.

12. Halterungsanordnung nach einem der Ansprüche 3 bis 8, **dadurch gekennzeichnet, dass** die Halterungsanordnung eine als Wand-, Tisch- oder Schrankhalterung ausgebildete, Lagerungs- oder Halterungseinrichtung mit ein oder mehreren Lagerungs- oder Halterungsstellen umfasst, und wobei jede Lagerungs- oder Halterungsstelle jeweils als Halterungselement (9, 9', 9") nach einem der Ansprüche 3 bis 8 ausgebildet ist.

## Claims

1. Holder arrangement for mobile devices, comprising either a housing formed with a main surface and having an interior space designed to accommodate a mobile device, or an adapter element which is formed with a main surface and is designed to be mechanically and physically connectible to a mobile device, the main surface (3) being formed on its inside and outside with electrical contact means (7, 7', 18) which are designed and arranged such that an electrical connection can be established between a mobile device which can be arranged at or on the inside of the main surface (3) and the contact means (7, 7") formed on the outside, **characterized in that** the main surface (3) has edge regions angled away from the outside, on which at least two recesses (4, 4', 4", 4‴, 4ʺʺ) are formed which are designed to physically receive an engagement means (10, 10', 11) parallel to the plane of the main surface (3) , the recesses (4, 4', 4", 4‴, 4ʺʺ) each being accessible via a slot-shaped opening arranged in a plane perpendicular to the main surface.

2. Holder arrangement according to claim 1 comprising an adapter element, **characterized in that** the adapter element (1, 1') is formed with at least two elastically bendable holder arms (2, 2'), which are designed and arranged such that a mechanical-physical connection can be established with a mobile device **in that** the holder arms (2, 2') form-fittingly engage around the latter on two opposite edge sides, wherein the mobile device can be arranged at or on the inside of the main surface (3).

3. Holder arrangement according to claim 1 or 2, **characterized in that** the holder arrangement comprises a holder element (9, 9', 9") which is formed with at least two engagement means (10, 10', 11) which each correspond to the recesses (4, 4', 4", 4"', 4ʺʺ) on the outside of the main surface (3) corresponding and which are designed to produce a releasable form-fitting and/or force-locking connection of the holder element (9, 9', 9") to the outside of the main surface (3).

4. Holder arrangement according to claim 3, **characterized in that** the holder element (9, 9', 9") is formed with contact means (15) which are arranged so as to correspond to the contact means (7, 7") provided on the outside of the main surface (3) of the housing (19, 19', 19") or the adapter element (1, 1'), and the holder element (9, 9', 9") is further formed with a connection device which is designed to establish an electrical connection between the contact means (15) and a power source.

5. Holder arrangement according to claim 4, **characterized in that** the connection device is additionally designed to establish a data communication connection.

6. Holder arrangement according to any of claims 3 to 5,
**characterized in that** two engagement means (10, 10', 11, 14, 14', 14", 14‴) are designed in a hook-shape and arranged to interact in pairs, with one engagement means (10, 10', 11, 14, 14', 14", 14‴) being designed to be rigid and the other engagement means (10, 10', 11, 14, 14', 14", 14"') being designed to be either elastically bendable or movable against a spring force in order to establish or release the connection of the holder element (9, 9', 9") to the main surface (3), and with both engagement means (10, 10', 11, 14, 14', 14", 14"') engaging in the respectively corresponding recesses (4, 4', 4", 4"', 4ʺʺ) on the outside of the main surface (3) when the connection is established.

7. Holder arrangement according to claim 6, **characterized in that** the engagement means (10, 10', 11, 14, 14', 14", 14‴) which is designed to be elastically bendable or movable against a spring force is formed with a rigidly connected lever arm (12) and the lever arm (12) is formed with a pressure surface.

8. Holder arrangement according to any of claims 3 to 7,
**characterized in that** at least two depressions (5, 5', 5", 5‴, 5"", 5‴ʺ, 5‴‴, 5‴ʺʺ, 6, 6', 6", 6‴) or recesses (4, 4', 4", 4‴, 4ʺʺ) on the outside of the main surface (3) and at the same time at least two engagement means (10, 10', 11, 14, 14', 14", 14‴) of the holder element (9, 9', 9") which correspond thereto are formed with magnetic means (33a, 33a', 33a", 33a"', 33b, 33b', 33b", 33b‴), each magnetic means (33a, 33a', 33a", 33a‴, 33b, 33b', 33b", 33b"') of the main surface (3) being assigned, in relation to its polarity and positioning, a magnetic means (33a, 33a', 33a", 33a‴, 33b, 33b', 33b", 33b‴) of the holder element (9, 9', 9"), and at least two magnetic means (33a, 33a', 33a", 33a"', 33b, 33b', 33b", 33b‴) of the main surface (3) on the one hand and at least two magnetic means (33a, 33a', 33a", 33a‴, 33b, 33b', 33b", 33b‴) of the holder element (9, 9', 9") on the other hand each being formed with a different polarity.

9. Holder arrangement according to any of claims 3 to 8,
**characterized in that** the holder element (9, 9', 9") is formed with a suction cup holder (20).

10. Holder arrangement according to any of claims 3 to 8,
**characterized in that** the holder element is formed, on the side facing away from the outside of the main surface (3), with a pistol-like handle (34) which is aligned perpendicularly or at an angle range of from 60° to 120° relative to the main surface (3).

11. Holder arrangement according to any of claims 3 to 8,
**characterized in that** the holder element (9, 9', 9") is formed with a ball head (17) for producing a releasable form-fitting and/or force-locking connection to another element.

12. Holder arrangement according to any of claims 3 to 8,
**characterized in that** the holder arrangement comprises a storage or holder device designed as a wall, table or cabinet holder with one or more storage or holding points, and each storage or holding point being formed as a holder element (9, 9', 9") according to any of claims 3 to 8.

## Revendications

1. Agencement de support pour terminaux mobiles, comprenant soit un boîtier réalisé avec une surface de base et comportant un espace intérieur qui est réalisé pour recevoir un terminal mobile, soit un élément adaptateur réalisé avec une surface de base et conçu de manière à pouvoir être relié mécaniquement et physiquement à un appareil mobile, dans lequel la surface de base (3) est réalisée sur sa face intérieure et sa face extérieure avec des moyens formant contacts (7, 7', 18) électriques qui sont configurés et disposés de telle sorte qu'une connexion électrique entre un terminal mobile pouvant être disposé au niveau de la face intérieure de la surface de base (3) ou sur celle-ci et les moyens formant contacts (7, 7") réalisés sur la face extérieure peut être établie, **caractérisé en ce que** la surface de base (3) présente des zones de bord coudées par rapport à la face extérieure, sur lesquelles sont réalisées au moins deux cavités (4, 4', 4", 4‴, 4"") qui sont respectivement conçues pour recevoir physiquement un moyen de mise en prise (10, 10', 11) parallèlement au plan de la surface de base (3), dans lequel les cavités (4, 4', 4", 4‴, 4"") sont respectivement accessibles par l'intermédiaire d'une ouverture en forme de fente qui est disposée dans un plan perpendiculairement à la surface de base.

2. Agencement de support selon la revendication 1 comportant un élément adaptateur, **caractérisé en ce que** l'élément adaptateur (1, 1') est réalisé avec au moins deux bras de support (2, 2') flexibles élastiquement, lesquels sont conçus et disposés de telle sorte qu'une liaison mécanique et physique peut être établie avec un terminal mobile par le fait que les bras de support (2, 2') viennent en prise avec ledit terminal mobile par complémentarité de forme sur deux côtés de bord opposés, dans lequel le terminal mobile peut être disposé au niveau de la face intérieure de la surface de base (3) ou sur celle-ci.

3. Agencement de support selon la revendication 1 ou 2,
**caractérisé en ce que** l'agencement de support comprend un élément de support (9, 9', 9") qui est réalisé avec au moins deux moyens de mise en prise (10, 10', 11) correspondant respectivement aux cavités (4, 4', 4", 4‴, 4"") sur la face extérieure de la surface de base (3), lesquels moyens de mise en prise sont conçus pour établir une liaison amovible par complémentarité de forme et/ou par force de l'élément de support (9, 9', 9") avec la face extérieure de la surface de base (3).

4. Agencement de support selon la revendication 3, **caractérisé en ce que** l'élément de support (9, 9', 9") est réalisé avec des moyens formant contacts (7, 7") qui sont disposés de manière à correspondre aux moyens formant contacts (15) réalisés sur la face extérieure de la surface de base (3) du boîtier (19, 19', 19") ou de l'élément adaptateur (1, 1') et l'élément de support (9, 9', 9") est en outre réalisé avec un dispositif de raccordement qui est configuré pour établir une connexion électrique des moyens formant contacts (15) avec une source de courant.

5. Agencement de support selon la revendication 4, **caractérisé en ce que** le dispositif de raccordement est en outre configuré pour établir une connexion de communication de données.

6. Agencement de support selon l'une des revendications 3 à 5,
**caractérisé en ce que** deux moyens de mise en prise (10, 10', 11, 14, 14', 14", 14‴) sont conçus en forme de crochet et sont disposés de manière à coopérer par paires, dans lequel un moyen de mise en prise (10, 10', 11, 14, 14', 14", 14"') est conçu rigide et l'autre moyen de mise en prise (10, 10', 11, 14, 14', 14", 14"') est conçu soit de manière à pouvoir fléchir élastiquement, soit de manière à pouvoir se déplacer à l'encontre d'une force élastique afin d'établir ou de rompre la liaison de l'élément de support (9, 9', 9") avec la surface de base (3), et dans lequel les deux moyens de mise en prise (10, 10', 11, 14, 14', 14", 14‴) viennent en prise, lors de l'établissement de la liaison, dans les cavités (4, 4', 4", 4‴, 4"") respectivement correspondantes sur la face extérieure de la surface de base (3).

7. Agencement de support selon la revendication 6, **caractérisé en ce que** le moyen de mise en prise (10, 10', 11, 14, 14', 14", 14‴) conçu de manière à pouvoir fléchir élastiquement ou à être déplacé à l'encontre d'une force élastique est réalisé avec un bras de levier (12) relié de manière rigide et le bras de levier (12) est réalisé avec une surface de pression.

8. Agencement de support selon l'une des revendications 3 à 7, **caractérisé en ce qu'**au moins deux renfoncements (5, 5', 5", 5‴, 5ʺʺ, 5‴ʺ, 5‴‴, 5‴ʺʺ, 6, 6', 6", 6"') ou cavités (4, 4', 4", 4‴, 4"") sur la face extérieure de la surface de base (3) et simultanément au moins deux moyens de mise en prise (10, 10', 11, 14, 14', 14", 14‴), correspondant à ceux-ci, de l'élément de support (9, 9', 9") sont réalisés avec des moyens formant aimants (33a, 33a', 33a", 33a‴, 33b, 33b', 33b", 33b"'), dans lequel respectivement un moyen formant aimant (33a, 33a', 33a", 33a‴, 33b, 33b', 33b", 33b‴) de l'élément de support (9, 9', 9") est associé, par rapport à sa polarité et à son positionnement, à un moyen formant aimant (33a, 33a', 33a", 33a‴, 33b, 33b', 33b", 33b‴) de la surface de base (3) et dans lequel au moins deux moyens formant aimants (33a, 33a', 33a", 33a‴, 33b, 33b', 33b", 33b‴) de la surface de base (3) d'une part et au moins deux moyens formant aimants (33a, 33a', 33a", 33a‴, 33b, 33b', 33b", 33b‴) de l'élément de support (9, 9', 9") d'autre part sont réalisés respectivement avec des polarités différentes entre eux.

9. Agencement de support selon l'une des revendications 3 à 8,
**caractérisé en ce que** l'élément de support (9, 9', 9") est réalisé avec un support à ventouse (20).

10. Agencement de support selon l'une des revendications 3 à 8,
**caractérisé en ce que** l'élément de support est réalisé sur la face opposée à la face extérieure de la surface de base (3) avec une poignée (34) en forme de pistolet qui est orientée perpendiculairement ou dans une plage angulaire allant de 60° à 120° par rapport à la surface de base (3).

11. Agencement de support selon l'une des revendications 3 à 8,
**caractérisé en ce que** l'élément de support (9, 9', 9") est réalisé avec une tête sphérique (17) pour établir une liaison amovible par complémentarité de forme et/ou par force avec un autre élément.

12. Agencement de support selon l'une des revendications 3 à 8,
**caractérisé en ce que** l'agencement de support comprend un dispositif de stockage ou de support réalisé comme un support mural, de table ou d'armoire et comportant un ou plusieurs emplacements de stockage ou de support, et dans lequel chaque emplacement de stockage ou de support est réalisé respectivement comme un élément de support (9, 9', 9") selon l'une des revendications 3 à 8.
